# EUROPÄISCHE PATENTSCHRIFT

(11) **EP 2 926 699 B1**
(45) Veröffentlichungstag und Bekanntmachung des Hinweises auf die Patenterteilung: **30.05.2018**
(21) Anmeldenummer: 15161741.2
(22) Anmeldetag: 30.03.2015
(51) Int. Cl.: A47J 31/44

(54) **Kaffeevollautomat mit einer Steuerungseinrichtung und Verfahren zur Ermittlung des tatsächlichen Restwasservolumens des Wassertanks**
FULLY AUTOMATIC COFFEE MAKER WITH A CONTROL DEVICE AND METHOD FOR DETERMINING THE ACTUAL WATER VOLUME REMAINING IN THE WATER TANK
MACHINE À CAFÉ ENTIÈREMENT AUTOMATIQUE DOTÉE D'UN DISPOSITIF DE COMMANDE ET PROCÉDÉ DE DÉTERMINATION DU VOLUME RÉEL D'EAU RÉSIDUELLE DANS LE RÉSERVOIR D'EAU

(30) Priorität: 03.04.2014 DE 102014206471
(43) Veröffentlichungstag der Anmeldung: 07.10.2015
(73) Patentinhaber: BSH Hausgeräte GmbH, 81739 München (DE)
(72) Erfinder: Hoeck, Florian, 83313 Siegsdorf (DE); Wende, Tobias, 83022 Rosenheim (DE)

(56) Entgegenhaltungen:
- EP-A1- 2 497 398
- DE-A1-102012 200 949
- US-A1- 2005 236 431

## Beschreibung

Die Erfindung betrifft einen Kaffeevollautomaten für Haushaltszwecke, der über einen Wassertank, einen Wasserstandsmesser, eine Wasserpumpe, eine Steuerungseinrichtung und einen Wasserflussmesser in der fluidischen Verbindung zwischen Wassertank und Wasserpumpe verfügt. Die Erfindung betrifft ein Verfahren zur Ermittlung des Restwasservolumens im Wassertank eines Kaffeevollautomaten.

Zur Erfassung der Wassermenge und zur Regelung des Wasserflusses weisen Kaffeevollautomaten für Haushaltszwecke nach dem Stand der Technik, wie beispielsweise in der DE 19 841 680 C1 beschrieben, häufig einen abnehmbaren Wassertank auf, dessen Füllstand durch Sensoren überwacht wird. Außerdem kann ein Durchflussmesser bzw. Flowmeter als weiterer Sensor im Hydraulikzweig der Pumpe installiert sein. Ein Getränkebereiter mit einer derartigen Erfassung der Wassermenge ist auch aus der US 2005/236431 A1 bekannt.

Dazu ist aus der DE 10 2012 200 949 A1 eine Tankauslass-Anschlussvorrichtung zum Anschluss an einen Flüssigkeitstank einer Getränkezubereitungsvorrichtung bekannt, die eine integrierte Sensoranordnung aufweist. Die integrierte Sensoranordnung umfasst einen Füllstandssensor und einen Durchflusssensor. Aus der EP 2 497 398 A1 ist ein Getränkebereiter mit drei separaten Getränkebereitungseinrichtungen bekannt. Die Getränkebereitungseinrichtungen sind jeweils über separate Leitungen, welche je einen separaten Durchflussmesser aufweisen, mit einer Haupteinlassleitung verbunden.

Die beschriebenen Sensoren können auch dazu dienen, das Vorhandensein oder das Fehlen des Wassertanks festzustellen. Darüber hinaus ist es auch möglich, eine Menge anzuzeigen, die das Zubereiten wenigen Kaffees gerade noch ermöglicht. Allerdings bietet nur die kapazitive Methode darüber hinaus auch noch die Möglichkeit, den Restmengenfüllstand im Wassertank in sehr feiner Auflösung zu ermitteln.

Aufgabe der Erfindung ist es daher, einen Kaffeevollautomaten bereitzustellen, der die noch verbleibende Wassermenge in seinem fluidischen System genau ermitteln kann.

Die Aufgabe wird bei dem eingangs genannten Kaffeevollautomaten erfindungsgemäß durch das Verfahren gemäß Patentanspruch 1 gelöst. Der Kaffeevollautomat weist eine Erfassungseinrichtung auf, die eine Menge gepumpten Wassers erfasst, die zwischen einer Meldung des Wasserstandsmessers für das Leerlaufen des Wassertanks und einem Signal eines Pumpenfehlers des Wasserflussmesser mittels der Pumpe gefördert wird. Das Signal des Wasserstandsmessers gibt an, dass der Wassertank ein werkseitig vordefiniertes Wasserstandsniveau unterschritten hat, wonach er als leer gilt. Herkömmlicherweise wird der Benutzer daraufhin aufgefordert, den Wassertank zu befüllen. Tatsächlich aber kann noch eine Wassermenge im Tank und in den von ihm wegführenden Leitungen vorhanden sein, die für die Zubereitung zumindest bestimmter Getränkearten ausreichen würde. Das werkseitige Wasserstandsniveau berücksichtigt aber in der Regel großzügig die Toleranzen des Fluidsystems, insbesondere des Tanks. Auch die Genauigkeit des Wasserstandsensors, insbesondere eines berührungslos arbeitenden Sensors, z. B. mit einem Reedschalter oder mit einem kapazitiven Sensor, kann in Abhängigkeit von Luftspalten zwischen dem Wassertank und dem Gehäuse des Kaffeevollautomaten stark variieren.

Ein Pumpenfehler wird festgestellt, wenn der Wasserflussmesser bei eingeschalteter Pumpe mangels Wasserdurchfluss kein Signal mehr sendet. Die Erfassungseinrichtung kann separat oder als Bestandteil der Steuerungseinrichtung ausgebildet sein, an die sie ein die erfasste Restwassermenge repräsentierendes Signal zur weiteren Verarbeitung abgibt.

Erfindungsgemäß wird also die Wassermenge ermittelt, die sich im fluidischen System des Kaffeevollautomaten noch befindet, sobald der Wasserstandsensor anspricht. Dazu erfasst die Erfassungseinrichtung ab diesem Zeitpunkt diejenige Restwassermenge, die bis zum Auftreten des Pumpfehlers gefördert wird. Die Steuereinrichtung verarbeitet diese Information, indem sie nach einer darauf folgenden Signalisierung des Wasserstandsensors den Bedarf zum Auffüllen entsprechend später signalisiert. Damit wird der Kaffeevollautomat hinsichtlich der Signalisierung des Nachfüllzeitpunkts des Wasserbehälters geeicht.

Vorteilhafterweise wird die Restwassermenge bei der ersten Inbetriebnahme des fabrikneuen Kaffeevollautomaten ermittelt und bei folgenden Brühvorgängen als Korrekturwert berücksichtigt. Sie kann unbemerkt vom Nutzer bei einem grundsätzlich vorgesehenen Initialisierungsvorgang erfasst werden, bei dem der Kaffeevollautomat zwar mit Wasser, aber ohne Kaffee betrieben wird, um seine Leitungen durchzuspülen und mit Wasser zu füllen.

Zusätzlich kann die Ermittlung der Restwassermenge nicht nur bei der ersten Inbetriebnahme des Kaffeevollautomaten, sondern auch bei jeder weiteren erneuten Inbetriebnahme, beispielsweise einer Reparatur, und insbesondere bei jedem Austausch eines Teils des fluidischen Systems des Kaffeevollautomaten erfolgen. So wird gewährleistet, dass nach jeder Manipulation eine neue Eichung des Kaffeevollautomaten hinsichtlich seiner tatsächlichen Restwassermenge erfolgen kann.

Schließlich kahn die Ermittlung der Restwassermenge nach jedem Reinigungs- und/oder Entkalkungsprozess erfolgen. Da bei beiden Prozessen kein regulärer Betrieb, sondern - ähnlich wie bei einer ersten Inbetriebnahme - ein vollständiger Durchlauf von Wasser erfolgt, kann die Ermittlung der Restwassermenge auch hier unbemerkt für den Nutzer des Kaffeevollautomaten erfolgen. Außerdem kann mit einer regelmäßigen Eichung einer alterungsbedingten Abweichung der Restwassermenge entgegengewirkt werden.

Die eingangs genannte Aufgabe wird durch ein Verfahren zum Betreiben eines Kaffeevollautomaten mit einem Wassertank, mit einer Wasserpumpe, mit einem Wasserstandsmesser für den Wassertank, mit einem Wasserflussmesser und mit einer Steuerungseinrichtung gelöst, welches jedenfalls die folgenden drei Schritte umfasst: Zunächst meldet der Wasserstandssensor das Erreichen eines werkseitig definierten Wasserstandsniveau bzw. die Leerung des Wassertanks. Die Pumpe bleibt daraufhin weiter in Betrieb und fördert Restwasser, welches sich noch im fluidischen System des Kaffeevollautomaten befindet. Die Erfassungsvorrichtung erfasst die jetzt geförderte Wasserflussmenge, bis zur Signalisierung des Wasserflussmessers, dass kein Wasser mehr gefördert wird. Die Erfassungseinrichtung kann beispielsweise zunächst lediglich eine Zeitspanne zwischen der Signalisierung und der Meldung erfassen. Aus der erfassten Zeitspanne und der bekannten Förderleistung der Pumpe je Zeiteinheit kann die Erfassungseinrichtung die Restwassermenge seit der Meldung des Wasserstandsmessers ermitteln. Ihr Wert berücksichtigt die Steuerungseinrichtung als Korrekturwert bei der nächsten und allen folgenden Aufforderung an den Benutzer, den Wassertank zu füllen.

Um die Ermittlung der Restwassermenge für den Nutzer unbemerkt ablaufen zu lassen, kann sie nach einer vorteilhaften Ausgestaltung des Verfahrens bei der ersten Inbetriebnahme des Kaffeevollautomaten durchgeführt werden. Nach dem Aufstellen eines Kaffeevollautomaten ist es notwendig, das System mit Wasser zu spülen und seine Leitungen zu füllen. Daher wird der Inhalt mindestens eines Wassertanks vollständig durch den Kaffeevollautomaten geleitet, bevor der erste Kaffee für den Nutzer zubereitet wird. Während dieser Initialisierungsprozedur kann die Restwassermenge mindestens einmal ermittelt werden. Bei mehreren Ermittlungen ist eine Mittelung möglich.

In einer vorteilhaften Ausgestaltung des erfindungsgemäßen Verfahrens kann die Restwassermenge auch dann ermittelt werden, wenn reparaturbedingte Veränderungen am fluidischen System des Kaffeevollautomaten und eine erneute Inbetriebnahme vorgenommen werden. Sie können z. B. den Austausch eines Bauteils des Kaffeevollautomaten ergeben haben. Durch die dadurch möglicherweise veränderten Mengenverhältnisse im fluidischen System ist eine erneute Feststellung der Restwassermenge nach der Meldung über die Leerung des Wassertanks erforderlich.

In einer weiteren vorteilhaften Ausgestaltung des erfindungsgemäßen Verfahrens kann es während oder nach jedem Reinigungsvorgang durchgeführt werden, um eine Eichung des gereinigten Fluidsystems und möglicherweise durch Alterung hervorgerufene Veränderungen am fluidischen System zu erreichen.

Das Prinzip der Erfindung wird im Folgenden anhand von Zeichnungen beispielshalber noch näher erläutert. In der Zeichnung zeigen:
- Figur 1:: eine schematische Ansicht der Informationserfassung und des -austauschs zur Restwasserbestimmung und
- Figur 2:: ein Ablaufdiagramm des erfindungsgemäßen Verfahrens.

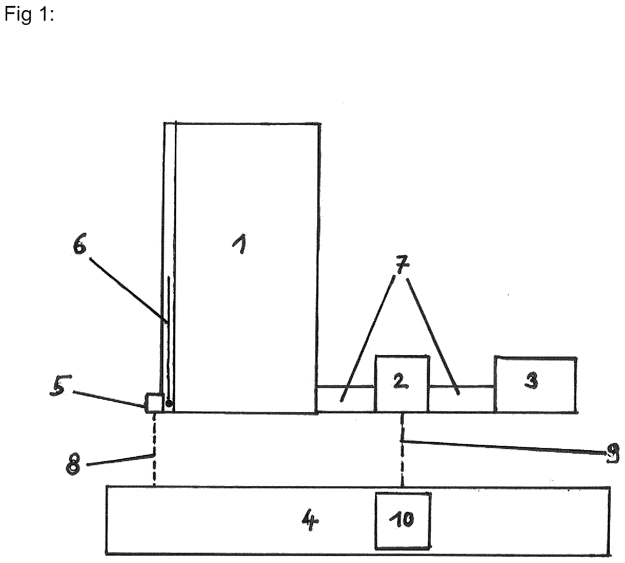

Figur 1 zeigt eine schematische Darstellung des Aufbaus zur Restwasserbestimmung in einem Kaffeevollautomaten mittels des erfindungsgemäßen Verfahrens. Ein nicht eigens dargestellter Kaffeevollautomat umfasst einen Wassertank 1, der über Leitungen 7 mit einer Wasserpumpe 3 verbunden ist. Zwischen dem Wassertank 1 und der Pumpe 3 ist ein Wasserflussmesser 2 angeordnet. Der Wassertank 1 verfügt außerdem über einen magnetischen Schwimmer 6, der mit einem Wasserstandssensor 5 mit Reed-Kontakten zusammenwirkt. Zumindest der Wasserstandssensor 5 und der Wasserflussmesser 2 sind über Datenleitungen 8, 9 mit einer Steuerungseinrichtung 4 verbunden. Sie enthält eine Erfassungseinrichtung 10, die eine Restwassermenge im fluidischen System aus dem Wassertank 1, den Leitungen 7 und dem Wasserflussmesser 2 erfasst.

Bei einem Initialisierungsvorgang eines fabrikneuen Kaffeevollautomaten pumpt die Pumpe 3 das im Wassertank 1 befindliche Wasser durch die Leitungen 7 in Richtung einer nicht dargestellten Brüheinrichtung. Der Wasserstandssensor 5 überwacht dabei die Füllhöhe des Wassertanks 1. Sobald der Schwimmer 6 in die Nähe des Bodens des Wassertanks 1 gelangt, meldet der Wasserstandssensor 5 die Leerung des Wasserbehälters 1 über die Datenleitung 8 an die Steuerungseinrichtung 4. Dort beginnt die Erfassung der Restwassermenge, indem nun die Erfassungseinrichtung 10 eine Zeitspanne erfasst, in der die Pumpe 3 das Wasser so lange weiter pumpt, bis der Wasserflussmesser 2 ein Signal über die Datenleitung 9 an die Steuerungseinrichtung 4 überträgt, dass er keinen Wasserfluss mehr misst. Aus der erfassten Zeitspanne und aus der bekannten Förderleistung der Pumpe 3 pro Zeiteinheit ermittelt die Erfassungseinrichtung 10 die seit der Meldung des Wasserstandssensors 5 geförderte Restwassermenge. Die Steuerungseinrichtung 4 ermittelt daraus einen Korrekturwert für die folgenden Brühprozesse, der bei der nächsten Meldung des Wasserstandssensors 5 berücksichtigt wird.

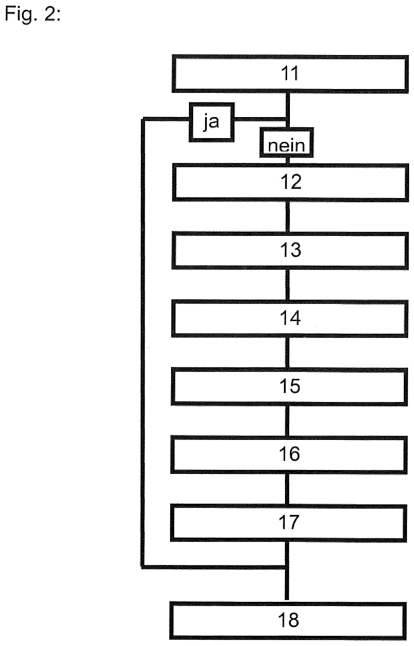

In Figur 2 ist ein Ablaufdiagramm des erfindungsgemäßen Verfahrens wiedergegeben. Vor jedem Brühvorgang wird eine Abfrage 11 nach einer bereits erfolgten Eichung durchgeführt. Ist sie erfolgt, wird mit einem Brühvorgang 18 in an sich bekannter Weise fortgefahren. Dies ist im Regelbetrieb der Normalfall.

Direkt nach einem Installationsvorgang eines fabrikneuen Kaffeevollautomaten dagegen ist naturgemäß zunächst noch keine erfindungsgemäße Eichung erfolgt. Fabrikneue Kaffeevollautomaten werden regelmäßig einem Initialisierungsdurchlauf unterzogen, in dem der Kaffeevollautomat zwar mit Wasser, aber ohne Kaffeepulver in Betrieb genommen wird, um seine Leitungen durchzuspülen und mit Wasser zu füllen. Während des Wasserdurchlaufs durch den Kaffeevollautomaten erfolgt - vom Benutzer unbemerkt - der Start des Eichungsvorgangs 12. Während des Betriebs einer Wasserpumpe erfolgt eine Meldung 13 des Wasserstandssensors des Kaffeevollautomaten, dass der Wassertank ein werkseitig vordefiniertes Wasserstandsniveau unterschritten hat, wonach er als leer gilt. Das vordefinierte Wasserstandsniveau repräsentiert eine Wassermenge im Tank, die vermutlich für die Zubereitung für nicht mehr alle Getränkearten ausreichen würde. Es berücksichtigt großzügig die Toleranzen des Fluidsystems, nämlich des Tanks, der Genauigkeit des Wasserstandsensors usw. Die nach der Meldung 13 verbleibende Restwassermenge könnte aber im Normalbetrieb beim Benutzer den Eindruck erwecken, für eine gewählte Getränkeart noch auszureichen, beispielsweise für einen Espresso.

Erfindungsgemäß beginnt daher nach der Meldung 13 während eines Initialisierungsdurchlaufs eine Restwassermessung 14. Anders als im Normalbetrieb, wo der Benutzer zum Auffüllen des Tanks aufgefordert werden würde, pumpt die Pumpe trotz der Meldung 13 weiter Wasser aus dem Tank. Sobald ein Wasserflussmesser zwischen Tank und Pumpe einen Pumpenfehler 15 signalisiert, also trotz laufender Pumpe keine Wasserförderung mehr stattfindet, wird der Messvorgang beendet. Im Schritt der Restwassermessung 14 wird also die zwischen der Meldung 13 und der Signalisierung 15 verstrichene Zeitspanne erfasst. Daraufhin erfolgt aus den werkseitig bekannten Daten der Förderleistung der Pumpe je Zeiteinheit die Berechnung 16 der zum Zeitpunkt der Meldung 13 tatsächlich noch im Kaffeevollautomaten befindlichen Restwassermenge. Dieser Wert wird zur Eichung 17 des Kaffeevollautomaten herangezogen. Ab dem ersten Brühvorgang wird er bei einer Meldung des Wasserstandsensors berücksichtigt, so dass der Benutzer nicht unnötig früh zum Befüllen des Wassertanks aufgefordert wird. Vielmehr steigert die Erfindung die Genauigkeit der Ermittlung und verbessert die Verwendung der Restwassermenge eines Kaffeevollautomaten.

Da es sich bei der vorhergehenden, detailliert beschriebenen Steuerungseinrichtung für Kaffeevollautomaten und dem zugehörigen Verfahren jeweils um ein Ausführungsbeispiel handelt, kann es in üblicher Weise vom Fachmann in einem weiten Umfang modifiziert werden, ohne den Bereich der Erfindung zu verlassen. Insbesondere können der Wasserstandsensor und die Art der Weitergabe der Informationen an die Steuerungseinrichtung abgewandelt werden und die Ausgestaltung von Wasserflussmesser und Wasserpumpe in anderer Form als in der hier beschriebenen erfolgen. Ebenso kann die Wiederholung des Verfahrens in einer anderen Form z. B. in regelmäßigen Abständen, vorgenommen werden, wenn dies z. B. zur Anpassung an alterungsbedingten Verschleiß notwendig wird. Weiter schließt die Verwendung der unbestimmten Artikel "ein" bzw. "eine" nicht aus, dass die betreffenden Merkmale auch mehrfach bzw. mehrmals vorhanden sein können.

### Bezugszeichenliste

- 1: Wassertank
- 2: Wasserflussmesser
- 3: Wasserpumpe
- 4: Steuereinrichtung
- 5: Wasserstandssensor
- 6: Schwimmer
- 7: fluidisches System
- 8: Datenleitung
- 9: Datenleitung
- 10: Erfassungseinrichtung
- 11: Abfrage
- 12: Start des Eichungsvorgangs
- 13: Tank-leer-Meldung
- 14: Beginn der Restwassermengenmessung
- 15: Signalisierung Pumpenfehler
- 16: Berechnung
- 17: Eichung
- 18: Brühvorgang mit korrigiertem Wert der Restwassermenge

## Patentansprüche

1. Verfahren zur Ermittlung einer Restwassermenge im fluidischen System eines Kaffeevollautomaten, **gekennzeichnet durch** die Verfahrensschritte:
a) Meldung (13) des Wasserstandssensors eines werkseitig definierten Wasserstandsniveaus,
b) Erfassen (14) des Wasserflusses seit der Signalisierung mittels eines Wasserflussmessers und
c) Beendigung der Erfassung (14) mit der Signalisierung (15) des Wasserflussmessers, dass kein Wasser mehr gepumpt wird.

2. Verfahren zur Ermittlung der Restwassermenge im fluidischen System eines Kaffeevollautomaten nach Anspruch 1, **dadurch gekennzeichnet, dass** das Verfahren bei einer ersten Inbetriebnahme des Kaffeevollautomaten durchgeführt wird.

3. Verfahren zur Ermittlung der Restwassermenge im fluidischen System eines Kaffeevollautomaten nach Anspruch 1 oder 2, **dadurch gekennzeichnet, dass** das Verfahren bei jeder Veränderung am fluidischen System des Kaffeevollautomaten durchgeführt wird.

4. Verfahren zur Ermittlung einer Restwassermenge im fluidischen System eines Kaffeevollautomaten nach den Ansprüchen 1 bis 3, **dadurch gekennzeichnet, dass** zusätzlich die ermittelte Restwassermenge als Korrekturwert für folgende Brühvorgänge verwendet wird.

5. Verfahren zur Ermittlung der Restwassermenge im fluidischen System eines Kaffeevollautomaten nach den Ansprüchen 1 bis 4, **dadurch gekennzeichnet, dass** das Verfahren während oder nach jedem Reinigungs- und/oder Entkalkungsvorgang des Kaffeevollautomaten durchgeführt wird.

## Claims

1. Method for determining an amount of water remaining in the fluid system of a fully automatic coffee maker, **characterised by** the method steps:
a) reporting (13) the water level, defined at the factory, by the water level sensor,
b) recording (14) the water flow since the signalling by means of a water flow meter and
c) terminating the recording (14) when the water flow meter signals (15) that no more water is being pumped.

2. Method for determining the amount of water remaining in the fluid system of a fully automatic coffee maker according to claim 1, **characterised in that** the method is performed at a first commissioning of the fully automatic coffee maker.

3. Method for determining the amount of water remaining in the fluid system of a fully automatic coffee maker according to claim 1 or 2, **characterised in that** the method is performed at each change to the fluid system of the fully automatic coffee maker.

4. Method for determining an amount of water remaining in the fluid system of a fully automatic coffee maker according to claims 1 to 3, **characterised in that** the determined amount of water remaining is used as a correction value for subsequent brewing processes.

5. Method for determining the amount of water remaining in the fluid system of a fully automatic coffee maker according to one of claims 1 to 4, **characterised in that** the method is performed during or after each cleaning and/or descaling process of the fully automatic coffee maker.

## Revendications

1. Procédé de détermination d'une quantité d'eau résiduelle dans le système fluidique d'une machine à café intégralement automatique, **caractérisé par** les étapes :
a) notification (13) par le capteur de niveau d'eau d'un niveau d'eau défini en usine,
b) saisie (14) du débit d'eau depuis la signalisation au moyen d'un débitmètre d'eau et
c) achèvement de la saisie (14) suite à la signalisation (15) du débitmètre d'eau selon laquelle plus aucune quantité d'eau n'est pompée.

2. Procédé de détermination de la quantité d'eau résiduelle dans le système fluidique d'une machine à café intégralement automatique selon la revendication 1, **caractérisé en ce que** le procédé est exécuté lors d'une première mise en service de la machine à café intégralement automatique.

3. Procédé de détermination de la quantité d'eau résiduelle dans le système fluidique d'une machine à café intégralement automatique selon la revendication 1 ou 2, **caractérisé en ce que** le procédé est exécuté lors de chaque modification concernant le système fluidique de la machine à café intégralement automatique.

4. Procédé de détermination de la quantité d'eau résiduelle dans le système fluidique d'une machine à café intégralement automatique selon les revendications 1 à 3, **caractérisé en ce que** la quantité d'eau résiduelle déterminée est en outre utilisée comme valeur de correction pour les processus d'échaudage suivants.

5. Procédé de détermination de la quantité d'eau résiduelle dans le système fluidique d'une machine à café intégralement automatique selon les revendications 1 à 4, **caractérisé en ce que** le procédé est exécuté durant ou après chaque processus de nettoyage et/ou de détartrage de la machine à café intégralement automatique.
